# EUROPÄISCHE PATENTSCHRIFT

(11) **EP 2 795 948 B1**
(45) Veröffentlichungstag und Bekanntmachung des Hinweises auf die Patenterteilung: **06.11.2019**
(21) Anmeldenummer: 12808757.4
(22) Anmeldetag: 11.12.2012
(51) Int. Cl.: H04W 12/08, H04L 29/06, H04L 9/32, G07C 9/00, H04L 29/08, H04W 88/06

(54) **VERFAHREN ZUR ÜBERMITTLUNG VON POST SENDUNGEN IN EINEM FAHRZEUG**
METHOD FOR TRANSMITTING POSTAL PACKAGES IN A VEHICLE
PROCÉDÉ POUR ACHEMINER DES ENVOIS POSTAUX DANS UN VÉHICULE

(30) Priorität: 21.12.2011 DE 102011089496
(43) Veröffentlichungstag der Anmeldung: 29.10.2014
(73) Patentinhaber: Continental Automotive GmbH, 30165 Hannover (DE)
(72) Erfinder: FOKKELMAN, Joris, 93105 Tegernheim (DE); SEMSEY, Akos, 93051 Regensburg (DE)
(86) Internationale Anmeldenummer: PCT/EP2012/075084
(87) Internationale Veröffentlichungsnummer: WO 2013/092306

(56) Entgegenhaltungen:
- EP-A2- 1 564 690
- WO-A1-2010/010314
- DE-A1-102006 042 358
- DE-A1-102011 018 901
- US-A1- 2004 243 426

## Beschreibung

Die vorliegende Erfindung betrifft ein Verfahren zur Übermittlung von Sendungen.

Lieferdienste, die Sendungen, wie Pakete, Briefe verteilen oder abholen müssen, treiben einen großen Aufwand, um von Lieferanschrift zu Lieferanschrift zu gelangen, wodurch viel Zeit vergeht und die Fahrprofile für die Lieferfahrzeuge ziemlich ungünstig sind.

Unter dem Begriff Sendung werden sämtliche Schriftstücke oder Gegenstände verstanden, die mit Hilfe eines Unternehmens zu einem Empfänger übergeben oder vom einem Absender zum Transport an eine Lieferanschrift abgeholt werden können. Hierzu gehören beispielsweise Briefsendungen, Kleingutsendungen und Geldübermittlungssendungen. Die Sendungen werden gewöhnlich an die Wohnadresse der betreffenden Person übermittelt. Ein Postempfänger einer Sendung ist diejenige Person, die in der Adresse benannt ist und für die eine (Post) Sendung bestimmt ist. Hierbei kann es sich um eine natürliche oder um eine juristische Person, z. B. eine Institution, eine Körperschaft oder ein Unternehmen, handeln. Eine Wohnadresse ist die Postanschrift einer Wohnung, in der eine Person dauerhaft wohnt. Hierbei kann es sich um die Haupt- oder um die Nebenwohnung handeln. Eine Wohnadresse besteht in der Regel aus der Angabe der Straße, der Hausnummer, des Ortes und des Landes. Teilweise wird auch die Appartement- oder Zimmernummer bzw. das Stockwerk, das Gebäudeteil (z. B. Rückgebäude) und ein Untermietverhältnis ("bei" oder "c/o") angegeben. Für den Versand von Sendungen (Postsendungen) beinhaltet die Wohnadresse auch die Postleitzahl und gegebenenfalls den Orts- bzw. Stadtteil. Liegt die Wohnadresse in einer Siedlung, so wird statt der Straßenangabe der Siedlungsname mit der Hausnummer genannt.

Unter einem Postempfänger wird auch die Person verstanden, die eine Postsendung tatsächlich in Empfang nimmt. Diese Person kann, muss aber nicht, die adressierte Person (Adressat) sein. Sie kann vom Empfänger beauftragt sein, diese in Empfang zu nehmen. Postsendungen werden gewöhnlich in den Hausbriefkasten gelegt. Bestimmte Sendungen wie z. B. solche mit der Sendungsform "Per Einschreiben" oder mit "Zustellungsurkunde", werden in der Regel dem Empfänger direkt übergeben, ebenso Telegramme und Eilsendungen. Manche Sendungen, z. B. nicht übergebbare Pakete, werden nicht in den Briefkasten eingelegt. In diesen Fällen erhält der Empfänger eine Benachrichtigungskarte.

Häufig kommt es vor, dass die betreffende Person bei Lieferung nicht an der Wohnadresse anzutreffen ist und eine bereits erwähnte Benachrichtigung von einem Post- bzw. Lieferdienst hinterlassen wird, wie, wo und wann die Sendung wieder übermittelt werden kann. Durch diese ineffiziente Logistik entstehen zusätzliche Umweltbelastung und Kosten, weil beispielsweise die Motoren in den Lieferfahrzeugen oft außerhalb des optimalen Arbeitsbereichs eingesetzt werden. Des Weiteren sind die Lieferfahrzeuge oft ein Verkehrshindernis, weil die Fahrer für die kurze Anhaltezeiten selten einen Parkplatz suchen, sondern einfach mit Warnblinker stehenbleiben und ein mehrfaches Anfahren an die Wohnadresse zur Übermittlung der Sendendungen notwendig ist.

Fahrzeuge sind mittlerweile häufig mit sogenannten "keyless entry-Zugangseinheiten" ausgestattet, welche es ermöglichen, das Fahrzeug von außen per Funk zu ent-/verriegeln. Hierzu ist eine im Kraftfahrzeug befindliche Steuereinheit notwendig, welche über Funksignale mit einer externen Einheit, welche zumeist in einem Schlüssel oder in einer Berechtigungskarte für das Fahrzeug integriert ist, kommuniziert. Die im Fahrzeug befindliche Steuereinheit und die externe Einheit, auch externe Identifikationseinheit genannt, welche der Fahrer gewöhnlich bei sich trägt, treten, nachdem beide aktiviert worden sind, in Funkkontakt. Beide Einheiten tauschen dann über Funk Daten aus, welche einen hinterlegten Code enthalten. Stimmt dieser Code zwischen Identifizierungseinheit und Steuereinheit überein, so wird das Fahrzeug durch den berechtigten Fahrer aufgeschlossen bzw. verschlossen Stand der Technik Dokument DE102011018901 beschreibt ein Verfahren zur Übermittlungen von Sendungen in Fahrzeugen.

Aufgabe der Erfindung ist es, die Lieferung von Sendungen oder bestellten Waren mit geringerem Logistikaufwand bereitzustellen.

Die Aufgabe wird gelöst durch die Merkmale des erfindungsgemäßen Verfahrens nach Anspruch 1. Das Verfahren zur Übermittlung von Sendungen kann auch in der Art angewendet werden, dass ein Lieferant auch in einem Fahrzeug hinterlegte Sendungen abholen kann, ohne, dass die Funktionalität des erfindungsgemäßen Systems oder Verfahrens umgeändert werden braucht.

Eine bevorzugten Ausführungsform des Verfahrens zur Übermittlung von Sendungen in Fahrzeugen kennzeichnet sich dadurch aus, das dieses System aus einem ersten Kommunikationsmodul M1 zum Aufbau einer Kommunikationsverbindung mit einem Kommunikationsendgerät eines Lieferanten der Berechtigungsdaten über ein Kommunikationsnetz N1 bezieht, aus einer ersten Identifikationsroutine zur eindeutigen Identifikation des Lieferanten, einem zweiten Kommunikationsmodul M2 zum Aufbau einer Kommunikationsverbindung über ein drahtloses Kommunikationsnetz N2 mit einer Kommunikationseinrichtung eines Steuergerätes der Zugangsanordnung eines Fahrzeuges, einer zweiten Identifikationsroutine zur eindeutigen Identifikation des Systems durch die Zugangsanordnung, einem dritten Kommunikationsmodul M3 zum Empfang einer Aktualisierungsanforderungsinformation des Fahrers und einer Aktualisierungsroutine zur Aktualisierung von Berechtigungsdaten in einem Speicher.

In einer vorteilhaften Ausgestaltung des Verfahrens ist das drahtlose Kommunikationsnetz N2 ein Mobilfunkkommunikationsnetz. Bei einer weiteren besonders vorteilhaften Ausgestaltung des Verfahrens sind Mittel zur Identifikation des Benutzers durch Stimmerkennung, durch Übertragung einer Identifikationsinformation -PIN/TAN-, oder durch ein Challenge-Response-Verfahren vorgesehen.

Eine weitere Ausgestaltung kennzeichnet sich dadurch aus, dass Mittel zur Identifikation des Lieferanten durch die Verwendung einer eindeutigen kryptographischen Information vorgesehen sind.

Eine besonders vorteilhafte Ausführung des Verfahrens weist Mittel zum Aufbau einer Kommunikationsverbindung über das drahtlose Kommunikationsnetz N2 über ein Mobilfunkkommunikationsnetz und/oder WLAN-Netz auf, welches auch als Fahrzeug-zu-Fahrzeug- oder Fahrzeug-zu-Infrastruktur-Kommunikation aufgeführt sein kann.

Bei einer weiteren sehr sicheren Ausführungsform sind Mittel für die Verschlüsselung der Kommunikation zwischen der Kommunikationseinrichtung des Systems und der Kommunikationseinrichtung der Zugangsanordnung durch Benutzung eines gemeinsamen Geheimnisses vorgesehen.

Die Aufgabe wird auch durch das Verfahren zur Übermittlung von Sendungen in Fahrzeugen gelöst. Hierbei wird eine Registrierung des Fahrzeuges als ein erster Schritt durchgeführt. Anschließend erfolgt eine Ermittlung der Position des Fahrzeuges, danach eine Freigabe einer Position des geparkten Fahrzeuges als Lieferanschrift an das System über eine Kommunikationseinrichtung über ein Kommunikationsnetz N2. Die Übermittlung der Position des geparkten Fahrzeuges bzw. des abgestellten Fahrzeuges erfolgt über eine Kommunikationseinheit über ein Kommunikationsnetz N2. Des Weiteren wird eine Übermittlung der Berechtigungsfreigabe zum Öffnen mindestens einer Tür und/oder eines Kofferraums des Fahrzeuges durch einen Lieferanten über eine Kommunikationseinrichtung des Systems an ein Kommunikationsendgerät des Lieferanten durchgeführt, wobei das Öffnen innerhalb eines bestimmten Zeitfensters gültig ist. Eine Übermittlung eines Funksignals, das eine Berechtigungsfreigabe enthält, wobei bei vorliegender Berechtigung die Zugangsanordnung ein Öffnen mindestens einer Tür und/oder eines Kofferraumes des Fahrzeuges aktiviert wird, wird durchgeführt, und nach erfolgtem Öffnen und Übermitteln der Sendung durch das manuelle Schließen einer Tür und/oder des Kofferraums des Fahrzeuges durch den Lieferanten, erfolgt eine Bestätigung der Übermittlung der Sendung durch den Lieferanten über die Kommunikationseinrichtung über das Kommunikationsnetz N2 an das Kommunikationsendgerät des Fahrers über das System. Nach einer Übertragung einer Aktualisierungsanforderung durch die Kommunikationseinrichtung des Fahrers wird eine Aktualisierung von Berechtigungsdaten im Steuergerät der Zugangsanordnung vorgenommen.

In einer vorteilhaften Ausgestaltung kann die Benachrichtigung der Lieferung dadurch erfolgen, dass das Fahrzeug über die Kommunikationseinrichtung als Datenpaket eine SMS, Email oder eine andere elektronische Mitteilung dem Fahrer über das Kommunikationsnetz N2 auf das Kommunikationsendgerät über die erfolgreiche Lieferung oder nicht erfolgte Lieferungen innerhalb des vorgegebenen Zeitfensters übermittelt wird. Wenn der Fahrer das Fahrzeug öffnet erhält er über die Zugangsanordnung eine kurze Mitteilung, die akustisch oder visuell auf dem Bildschirm des Kommunikationsendgerätes dargestellt wird, dass eine neue Lieferung erhalten wurde oder ein Paket um eine bestimmte Uhrzeit abgeholt wurde. Bei der Ausgabe, dass eine Lieferung erfolgt ist, ist es erfindungsgemäß angedacht, dass eine Warnung beim Aussteigen ausgegeben wird, wenn beispielsweise gelieferte Waren noch im Kofferraum sind. Hierdurch soll der Fahrer daran erinnert werden, dass er beim Verlassen des Fahrzeugs die gelieferten Waren nicht im Fahrzeug vergisst.

In einer weiteren vorteilhaften Ausgestaltung erfolgt die Bestätigung der erfolgten Lieferung dadurch, dass das Fahrzeug nach einer Lieferung und dem Verschließen des Kofferraums oder der Türen eine Bestätigung an das System abgibt, um zu signalisieren, dass das Fahrzeug wieder verschlossen ist. Falls das Fahrzeug nicht in einem Zeitraum wieder versperrt wird, bekommt das Kommunikationsendgerät des Lieferanten über das System eine Warnungsmitteilung, dass das Fahrzeug nicht ordnungsgemäß verschlossen ist.

Es ist erfindungsgemäß angedacht, dass eine visuelle, akustische, sensorische Dokumentation der Lieferung mit einer On Board Kamera erfolgt. Hierzu ist es angedacht, dass, wenn das Fahrzeug geöffnet wird, im Fahrzeug befindliche Kameras, die im Fahrzeug für diese oder andere Zwecke eingebaut sind, Fotos oder Filmaufnahmen durchführen und von der Zugangsanordnung getriggert werden. Es ist auch angedacht, dass Kameras im Kofferraum eingebaut werden. Besonders vorteilhaft ist die Verwendung von Kameras, die wegen Blind-Spot Detektierung, Einparkassistenz, Unterstützung von adaptiven Rückhaltesystemen, Schlafwarnsysteme oder andere Zwecke eingebaut sind, und von der Zugangsanordnung angesteuert werden, wenn der Kofferraum oder die Türen geöffnet werden. Die Filme oder Fotos können die eventuellen Missbrauchsfälle vermeiden oder aufklären. Sensorwerte von Beschleunigungssensoren oder sogenannte Körperschallsensoren oder Mikrofon-Signale werden ebenfalls zu Dokumentationszwecken der erfolgten Übermittlung der Sendung herangezogen.

In einer weiteren vorteilhaften Ausgestaltung wird die Position mindestens einer freien Abstellfläche basierend auf einer Fahrzeug-zu-Fahrzeug- und/oder einer Fahrzeug-zu-Infrastruktur-Kommunikation ausgehend von der aktuellen Position des Fahrzeugs berechnet und einer Navigationsvorrichtung des Fahrzeugs übermittelt. Hierbei kann die Navigationsvorrichtung die Position über die Kommunikationseinrichtungen an das System übermitteln.

Eine weitere Ausgestaltung des erfindungsgemäßen Verfahrens kennzeichnet sich dadurch aus, dass die Position der freien Abstellfläche der Navigationsvorrichtung dann übermittelt wird, wenn sich das Fahrzeug in einem vorab definierten Bereich in Bezug auf die freie Abstellfläche, vorzugsweise in der Nähe einer Schranke einer Parkeinrichtung, befindet.

Eine sehr vorteilhafte Ausgestaltung ist dadurch gekennzeichnet, dass nach dem Abstellen des Fahrzeugs auf einer ausgewählten freien Abstellfläche die Position der ausgewählten Abstellfläche einem vorzugsweise durch den Fahrer transportierbaren Speichermedium, vorzugsweise einem Schlüssel des Fahrzeugs und/oder einem Mobiltelefon des Fahrers und/oder einer Chipkarte, übermittelt, danach auf dem Speichermedium gespeichert und vorzugsweise zusätzlich angezeigt wird.

Eine vorteilhafte Ausgestaltung zeichnet sich dadurch aus, dass die Navigationsvorrichtung oder das Speichermedium die Position an das System der ausgewählten Abstellfläche über einem Parkplatz-Management-System der Parkeinrichtung überträgt.

In einer weiteren Ausgestaltung wird dem System über das Parkplatz-Management-System der Parkeinrichtung beim Verlassen der ausgewählten Abstellfläche die Position der nun wieder freien Abstellfläche übertragen.

In einer weiteren vorteilhaften Ausgestaltung wird die Position der mindestens einen freien Abstellfläche aus einer Abstandsmessung von mindestens einem Fahrzeug oder mindestens einem Infrastrukturelement zu anderen Fahrzeugen oder zu anderen Infrastrukturelementen berechnet, welche innerhalb eines Umkreises mit einem vorab festgelegten Radius um das eine freie Abstellfläche suchende Fahrzeug angeordnet sind.

Eine vorteilhafte Ausgestaltung ist dadurch gekennzeichnet, dass von dem mindestens einen Infrastrukturelement weitere Informationen zur Abstellflächensituation, vorzugsweise über Anwohnerparkzonen oder Halteverbote, übermittelt und/oder aus einer digitalen Karte der Navigationsvorrichtung bereitgestellt sowie zur Berechnung der Position der mindestens einen freien Abstellfläche herangezogen werden.

In einer weiteren Ausgestaltung wird der Lieferant durch Stimmerkennung, durch Übertragung einer Identifikationsinformation -PIN/TAN-, oder durch ein Challege-Response-Verfahren identifiziert. Eine weitere Ausgestaltung ist dadurch gekennzeichnet, dass das System durch die Verwendung einer eindeutigen kryptographischen Information identifiziert wird.

In einer weiteren besonders vorteilhaften Ausführung wird die Kommunikationsverbindung über das drahtlose Kommunikationsnetz N2 über ein Mobilfunkkommunikationsnetz und/oder WLAN-Netz aufgebaut.

In einer weiteren vorteilhaften Ausgestaltung wird die Kommunikation zwischen der Kommunikationseinrichtung des Systems und Kommunikationseinrichtung der Zugangsanordnung und der Kommunikationseinrichtung des Lieferanten durch Benutzung eines gemeinsamen Geheimnisses verschlüsselt.

Ein Vorteil des erfindungsgemäßen Verfahrens ist es, dass mittels diesen eine Verwaltung von Aufenthaltsorten der aufzufinden Fahrzeuge logistische Synergieeffekte erzeugt werden, da ein hoher Grad an Automatisierung für die Übermittlung von den Sendungen zu den betreffenden Fahrzeugen erfolgt. Für einen Lieferdienst wird mittels der Erfindung ein reduzierter Aufwand für die Zustellzeit und Energieverbrauch mit alle umweltschonenden Nebeneffekten erzielt.

Ein weiterer Aspekt der Erfindung ist es, dass eine Kommunikationsverbindung zwischen einem autorisierten Lieferanten, der die entsprechenden Berechtigungsdaten von dem erfindungsgemäßen System erhält, und der Zugangsvorrichtung des Fahrzeuges aufgebaut wird. Wenn das System oder das mobile Endgerät des Lieferanten erfolgreich identifiziert wurde, werden die Berechtigungsdaten im Steuergerät der Zugangsanordnung für den Übermittlungsvorgang des Lieferanten aktualisiert und entsprechend aktiviert, so dass die Sendung im Kofferraum oder in der Fahrgastzelle durch das berechtigte Zulassen des Öffnens der Fahrzeugtüren oder Heckklappe des Kofferraums mittels des Steuergeräts für den Lieferanten zugelassen wird, so dass die Sendung hier sicher übermittelt werden kann. Der Kofferraum ist erfindungsgemäß der Platz im Fahrzeug, der für das Transportieren von Ladung vorgesehen ist. In der Regel befindet er sich im Heckbereich, einige Fahrzeugtypen haben ihn vorne. Als Fahrgastzelle bezeichnet man in der Kraftfahrzeugtechnik den Raum, in dem sich die Fahrzeuginsassen befinden.

Weiterhin kann das Verfahren nach seinem Einleiten durch den Fahrer auf Seiten des Systems vollautomatisiert, also schnell und ohne Kosten verursachenden Personaleinsatz erfolgen. Auch durch die Nutzung einer bestehenden Mobilfunkinfrastruktur und die Möglichkeit, das weitgehend mit Hilfe handelsüblicher Serverkomponenten zu verwirklichen, werden Kosten reduziert. Außerdem wird durch die Automatisierung das Risiko von Fehleingaben minimiert. Ein weiterer Vorteil der Erfindung ist die Möglichkeit, dass die Aktualisierung der Berechtigungsdaten direkt über ein mobiles Endgerät des Fahrers und des Lieferanten erfolgen kann.

Das erfindungsgemäße Fahrzeug bietet eine zuverlässige und sichere Möglichkeit, dass ein Lieferant z. B. den Kofferraum öffnen kann, aber hierdurch eine Diebstahlsicherheit nicht kritisch gefährdet wird. Es kann ein Wechselcodeverfahren eingesetzt werden, was nur in einem Zeitfenster nur vom Lieferanten einmalig benutzt werden kann und nach einmaliger Nutzung erlischt.

Das Fahrzeug oder der Fahrer melden sich über Kommunikationsverbindungen in einer mit dem erfindungsgemäßen System verbundenen Infrastruktureinheit, wie z. B. Parkhaus-Verwaltungssystem, an, wobei bei dieser Meldung dem erfindungsgemäßen System mitgeteilt wird, wann und wo das Fahrzeug geparkt wird, um eine Sendung über einen Lieferanten entgegen nehmen zu können. Hierbei wird vorteilhaft durch die Infrastruktur und den so entstandenen Informationsdienst dafür gesorgt, dass die Lieferungen durch optimierte Bündelung von Sendungen optimiert vom Lieferdienst übermittelt werden können.

Durch die Übermittlung der Berechtigung, das betreffende Fahrzeug zu öffnen, ist es auch angedacht, dass bei Übertragung der Berechtigung vom mobilen Endgerät des Lieferanten oder dem damit vernetzten Lieferfahrzeug auf das vom Lieferanten erzeugte Funksignal alle Fahrzeuge in der Nähe mit einem Lichtsignal reagieren, die eine Lieferung erwarten. Hierdurch wird das Auffinden durch den Lieferanten erleichtert, um die betroffenen Fahrzeuge schnell zu finden, wobei, wie bereits erwähnt, das Öffnen des Kofferraums oder der Türen nur mit dem speziellen individual Wechselcode möglich ist.

Weitere vorteilhafte Weiterbildungen des erfindungsgemäßen Verfahrens sowie des Systems zur Übermittlung von Sendungen sind den weiteren Ansprüchen zu entnehmen.

Im Folgenden wird das erfindungsgemäße Verfahren anhand von zeichnerischen Darstellungen näher erläutert. Es zeigen schematisch:
- Fig. 1: ein Fahrzeug mit einer Kommunikationsvorrichtung und eine schematische Darstellung einer Anordnung zur Realisierung des erfindungsgemäßen Verfahrens und des Systems,
- Fig. 2: ein erstes Ausführungsbeispiel der Verwendung des erfindungsgemäßen Verfahrens in einer Parkeinrichtung,
- Fig. 3: eine schematische Darstellung der erfindungsgemäßen Systems einer Zugangsanordnung,
- Fig. 4: eine schematische Darstellung einer Anordnung des erfindungsgemäßen Verfahrens, bei der die Aktualisierung über ein Mobilfunktelefon eingeleitet wird, und
- Fig. 5: eine schematische Darstellung einer Anordnung zur Realisierung des erfindungsgemäßen Systems.

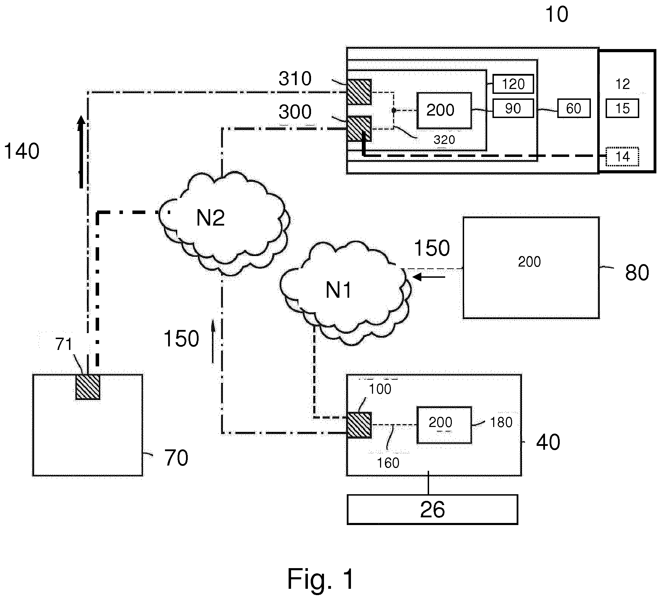

Ein in Figur 1 dargestelltes Fahrzeug 10, beispielsweise ein Auto, LKW, welches auf einer Abstellfläche geparkt werden soll, ist mit einem Positionierungssystem, beispielsweise einem GPS-System 12, welches eine Rechenvorrichtung 14 und eine Navigationsvorrichtung 15 beinhaltet, ausgerüstet. Die Figur 1 weist ein System 40 zum Übermitteln von Sendungen auf. Hierzu wird ein Aktualisieren von Berechtigungsdaten 200 einer Zugangsanordnung 60 eines Fahrzeugs 10 und ein Kommunikationsendgerät 70 des Lieferanten durchgeführt. Das System 40 kann eine Server-basierte Lösung sein, die über die üblichen Komponenten und Peripherie wie Prozessor, Speicher, Netzwerkanbindung, Betriebssystem, Applikationssoftware etc. -nicht dargestelltverfügen. Daneben sind ein erstes Kommunikationsnetz N1 und ein zweites Kommunikationsnetz N2 abgebildet.

Bei dem Kommunikationsendgerät 70 des Lieferanten handelt es sich beispielsweise um ein Mobilfunkendgerät, ein multifunktionales Smartphone, eine Chipkarte oder ein ähnliches funkkommunikationsfähiges Endgerät mit einem Speicher, das mindestens eine Kommunikationseinrichtung 71 aufweist. Das System 40 verfügt über eine Kommunikationseinrichtung 100, über die das System 40 sowohl mit dem Kommunikationsnetz N1, als auch mit dem Kommunikationsnetz N2 kommunizieren kann. Außerdem ist in das System 40 die Kommunikationseinrichtung 100 über einen Datenbus 160 mit einem Datenmodul 180 unter Verwendung einschlägiger Kommunikationsprotokolle verbunden. Von diesem Datenmodul 180 oder einer anderen kompetenten Einrichtung wurden die Berechtigungsdaten 200 ursprünglich vergeben bzw. verwaltet. Das Kommunikationsendgerät 80 des Fahrers ist ebenfalls mit dem Kommunikationsnetz N1 beispielsweise drahtlos verbunden.

Das Fahrzeug 10 verfügt über eine Zugangsanordnung 60. Diese Zugangsanordnung 60 verfügt über ein Steuergerät 120. Dieses Steuergerät 120 ist über eine Kommunikationseinrichtung 300 mit dem Kommunikationsnetz N2 verbunden. Ebenfalls im Steuergerät 120 sind in einem Speicher 90 die Berechtigungsdaten 200 von autorisierten Lieferanten der Zugangsanordnung 60 gespeichert.

Außerdem dargestellt ist das mobile Endgerät bzw. Kommunikationsendgerät des Lieferanten 70, das über eine Kommunikationseinrichtung 71 verfügt. Mittels dieses mobilen Endgerätes ist es möglich, über dessen Kommunikationseinrichtung 71 ein codiertes und verschlüsseltes Funksignal 140 an eine Kommunikationseinrichtung 310 des Steuergerätes 120 der Zugangsanordnung 60 zu übertragen. Als Funksignal wird ein Kommunikationssignal verstanden, was auf elektromagnetischen Signalen, inklusive optischer Signale (z. B. Infrarotlicht), basiert. Das Fahrzeug 10 reagiert auf ein bestimmtes verschlüsseltes Funksignal 140 des Kommunikationsendgerätes 70 des Lieferanten, das vorzugsweise auf einem bestimmten Zeitfenster begrenzt ist und nach Benutzung der Öffnungskommandos entwertet wird. Das Funksignal 140 gibt eine Zugangsberechtigung, aber keine Fahrberechtigung, um das Fahrzeug zu starten. Eine nicht eingezeichnete aktive Alarmanlage wird erfindungsgemäß für den Zeitraum der berechtigten Übermittlung der Sendung in das Fahrzeug 10 in der Art modifiziert, dass eine Alarmauslösung nicht erfolgt.

Mithilfe des Funksignals 140 können verschiedene Funktionen der Zugangsanordnung 60 ausgelöst werden. Dies kann beispielsweise das Öffnen oder Schließen der Türverriegelung oder der Kofferraumverriegelung sein. Dabei werden dem Kommunikationsendgerät 70 des Lieferanten bestimmte Informationen und dem Steuergerät 120 beispielsweise von dem Datenmodul 180 des Systems bestimmte Benutzerdaten 200 zugeordnet und gespeichert. Diese ermöglichen nur mit einem bestimmten Kommunikationsendgerät 70 des Lieferanten die Zugangsanordnung 60 eines bestimmten Fahrzeugs 10 zu bedienen. Der Speicher 90 und die Kommunikationseinrichtungen 300 und 310 sind über einen Datenbus 320 unter Verwendung von einschlägigen Kommunikationsprotokollen miteinander verbunden.

Im Funksignal werden Datenpakete übertragen, die als ein erstes Datenelemente eine Fahrzeugidentifikation, die Fahrzeugfarbe, Fahrzeugtyp, Fahrzeugkennzeichen, einen digitalen Identifikationscode, eine Rufnummer umfassen kann, als zweites Datenelement, die Fahrzeugposition oder eine URL zu einem Dienst, wie einem IP-basiertem Parkplatzmanagement-System 26, wo die Fahrzeugposition abgefragt werden kann, umfassen kann, als drittes Datenelement einen Zugangscodes, welche eine profilierten Zugang für den Lieferanten ermöglicht, aber keine Fahrberechtigung gibt und nach einer bestimmten Zeit seine Gültigkeit verliert. Alternativ werden weitere Datenfelder belegt, wie "Suchcode", "Genehmigung zur Tür Öffnung", "Kühlung der Sendung erforderlich nach Öffnen des Fahrzeuges".

Das Kommunikationsendgerät 80 des Fahrers, das ebenfalls ein Handy, Smartphone, ein Multifunktions-Autoschlüssel oder eine Chipkarte ist, enthält oder bekommt vom Fahrzeug 10 über das System 40 eine bestimmte Zahl von Zugangscodes, die z. B. beim Einkaufen vom Fahrer benutzt werden können. Wenn der Fahrer etwas bezahlen und liefern lassen möchte, wird ein Zugangscode des Fahrzeuges 10 vom Kommunikationsendgerät 70 des Fahrers zu einem Gerät an der Kasse des betreffenden Ladengeschäftes an das System 40 über das Kommunikationsnetz N1 oder N2 kommuniziert. Hierbei können die Zugangscodes einen Gültigkeitszeitraum von einigen Stunden haben, die nach Ablauf dieser nicht mehr verwendet werden können.

Bei dieser Variante der Vergabe der Berechtigung muss das Fahrzeug 10 nicht notwendigerweise mit der Umgebung direkt vernetzt werden. Die im Kommunikationsendgerät 80 des Fahrers vorbereiteten Zugangscodes bekommen die Gültigkeit beim Aussteigen, in dem der Zeitraum der Aussteigezeitpunkt + X Stunden bestimmt werden, wobei X Stunden die Zeitdauer des Aufenthalt auf dem Parkplatz für die Dauer des Einkaufes ist, die der Fahrer vorbestimmt über eine nicht dargestellte Human Machine Interface (HMI) des Fahrzeuges 10 eingibt und die dann auf das Kommunikationsendgerät des Fahrers 80 übertragen wird.

Nach erfolgter eindeutiger Identifikation des autorisierten Lieferanten werden die Berechtigungsdaten 200 daraufhin von der Kommunikationseinrichtung 100 des Systems 40 über das Kommunikationsnetz N2 eine Kommunikationsverbindung zur Kommunikationseinrichtung 300 des Steuergerätes der Zugangsanordnung 60 hergestellt.

Nunmehr wird das Kommunikationsendgerät 70 des Lieferanten von dem Steuergerät 120 der Zugangsanordnung 60 eindeutig identifiziert. Dies kann beispielsweise durch die Verwendung eines eindeutigen kryptographischen Schlüssels erfolgen. Es ist dabei nicht notwendig, dass dieser Schritt zeitlich unmittelbar nach der Identifikation des Lieferanten und der Festlegung der Anforderungsaktualisierung geschieht.

Eine Möglichkeit der Identifizierung bzw. Authentisierung des Kommunikationsendgeräts 70 des Lieferanten durch das Steuergerät 120 der Zugangsanordnung 60 ist beispielsweise ein Challenge/Response-Verfahren. Hierbei wird vorausgesetzt, dass das Steuergerät 120 der Zugangsanordnung 60 und das Kommunikationsendgerät 70 des Lieferanten ein gemeinsames kryptographisches Geheimnis besitzen. Dieses Geheimnis wird zweckmäßigerweise bei der ersten Anmeldung/Registrierung des Fahrers bei dem System 40 erzeugt, entweder vom Steuergerät der Zugangsanordnung 60 oder von dem System. Das Geheimnis wird dann im Speicher 90 im Steuergerät 120 sowie einem Speicher 90 in dem System gespeichert. Nach Aufnahme der Kommunikation zwischen dem Kommunikationsendgerät 70 des Lieferanten und dem Steuergerät SG über das Kommunikationsnetz N2 wird das Steuergerät 120 eine Anfrage -Challenge- an das System und das Kommunikationsendgerät 70 des Lieferanten senden, aus der das System und das Kommunikationsendgerät 70 des Lieferanten mit Hilfe des kryptographischen Geheimnisses die Antwort -Response- berechnet und über das Kommunikationsnetz N2 zurück an das Steuergerät SG der Zugangsanordnung 60 sendet. Dieses Verfahren hat darüber hinaus den Vorteil, dass auch die folgende weitere Kommunikation zwischen dem System, Kommunikationsendgerät 70 des Lieferanten und dem Steuergerät 120 über das Kommunikationsnetz N2 zur Übertragung der Aktualisierungsanforderung 700 unter Benutzung des gemeinsamen Geheimnisses verschlüsselt ablaufen kann und daher nicht vorausgesetzt werden muss, dass die über das Kommunikationsnetz N2 ablaufenden Protokolle per se eine ausreichende Datensicherheit bieten.

Das einfachere Verfahren zur Identifizierung bzw. Authentisierung des System durch das Steuergerät SG der Zugangsanordnung 60 ist die Verwendung eines PIN-Codes gegebenenfalls zusammen mit einem einmalig verwendbaren TAN-Code. Diese Codes, also PIN und gegebenenfalls eine ausreichende Menge an TAN-Codes, werden zweckmäßigerweise bei der ersten Anmeldung/Registrierung des Fahrers bei dem System 40 erzeugt, entweder vom Steuergerät 120 der Zugangsanordnung 60 oder von dem System 40, und im Speicher 90 des Steuergeräts 120 sowie in dem System 40 gespeichert. Hierbei findet die Kommunikation unverschlüsselt statt, und es wird vorausgesetzt, dass die über das Kommunikationsnetz N2 ablaufenden Protokolle eine ausreichende Datensicherheit bieten.

Alternativ kann zwischen dem Kommunikationsendgerät 80 des Fahrers und dem Kommunikationsendgerät des Lieferanten 70 das Funksignal derart aufgeteilt werden, dass die übertragenen Datenpakete zwischen Fahrer und Lieferant in der Zugangsanordnung 60, so dass das Datenpaket teilweise vom Fahrer Handy oder Email oder vergleichbare Technologie übermittelt wird, teilweise beim Lieferant hinterlegt wird und die zwei Teilpakete nur zusammen einen Zugangscode bzw. Berechtigungsdaten 200 ergeben. Dieses Verfahren verhindert vorteilhaft, dass ein Zugangscode bei der Übertragung abgehört und das Fahrzeug 10 unberechtigt geöffnet wird.

Bei einer Variante dieses Verfahrens werden von dem System 40 selbst keine Identifikationsdaten gespeichert. Vielmehr übermittelt das System 40 nach Aufbau der Kommunikation zwischen System und Steuergerät 120 die Identifikationsdaten des Lieferanten an das Steuergerät 120.

In diesem Fall werden die Identifikationsdaten (z. B. PIN-Code bzw. TAN-Codes) auf der einen Seite im Speicher SP des Steuergeräts 120 gespeichert. Auf der anderen Seite sind sie dem Lieferanten bekannt oder beispielsweise in einem Speicher 90 in seinem Kommunikationsendgerät 70 abgespeichert.

Nach erfolgter eindeutiger Identifikation des Systems 40 gegenüber dem Steuergerät 60 wird die Aktualisierungsanforderung 700 des Fahrers von der Kommunikationseinrichtung 100 des Systems über das Kommunikationsnetz N2 an die Kommunikationseinrichtung 300 des Steuergerätes 60 übertragen. Es wird dann eine Aktualisierung der Berechtigungsdaten 200 im Speicher 90 des Steuergeräts 120 der Zugangsanordnung 60 entsprechend der Aktualisierungsanforderung 700 vorgenommen.

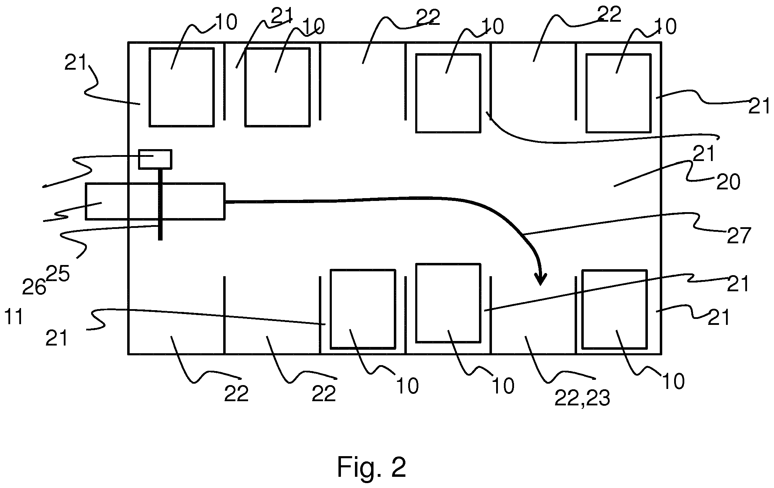

In Fig. 2 wird ein Parkplatz suchendes Fahrzeug dargestellt. Wenn ein ankommendes Fahrzeug 11 in einer Parkeinrichtung, beispielsweise in einem in Figur 2 dargestellten Parkhaus 20, eine Abstellfläche sucht, befindet sich das Fahrzeug zunächst an einer Eingangsschranke 25 zu dem Parkhaus 20. Das ankommende Fahrzeug 11 ist analog zu dem in Figur 1 dargestellten Fahrzeug 10 ausgestattet.

Das Parkhaus 20 weist Abstellflächen 21 auf, welche mit Fahrzeugen 10 belegt sind. Die Abstellflächen 22 sind demgegenüber frei, so dass auf ihnen geparkt werden kann.

An der Eingangsschranke 25 des Parkhauses 20 werden mittels Kurzstreckenfunk (z. B. Infrarot, Bluetooth, DSRC, ITS-G5, W-LAN, etc.) von dem in der Eingangsschranke 25 integrierten Parkplatz-Management-System 26 zu der Rechenvorrichtung 14 des Fahrzeugs 11 über die Kommunikationsverbindung, d. h. mittels einer Fahrzeug-zu-Infrastruktur-Kommunikation, über die Kommunikationseinrichtungen 300/310 Informationen darüber übertragen, welche Abstellflächen 22 frei sind. Die Positionen der freien Abstellflächen 22 können beispielsweise als absolute Positionen des GPS-Systems 12 oder als relative Positionen, z. B. in Bezug auf die Position der Schranke 25, angegeben werden.

Das GPS-System 12 wird nach der Übertragung der Informationen über freie Abstellflächen 22 in den sogenannten Parkhaus-Modus versetzt. Anhand der von dem Parkhaus übermittelten Daten berechnet die Rechenvorrichtung 14 nun die Positionen der freien Abstellflächen 22 im Bezugssystem des fahrzeugeigenen GPS-Systems 12 und stellt diese dem Fahrer auf einer speziellen, für diesen Modus geschaffenen Anzeige dar. Der Fahrer kann nun eine für ihn geeignete Abstellfläche für sein Fahrzeug 11 auswählen und die Freigabe dieser Position als Lieferort bestätigen.

Mittels der Navigationsvorrichtung 15, welche die berechneten Positionsdaten von der Rechenvorrichtung 14 erhält, kann anschließend eine Routenführung zu einer beispielsweise durch den Fahrer ausgewählten Abstellfläche 23 ermittelt und dem Fahrer zur Verfügung gestellt werden. Der Fahrer bewegt sich mit seinem Fahrzeug anschließend anhand der berechneten Routenführung 27 zur ausgewählten Abstellfläche 23 und parkt sein Fahrzeug 11 dort. Die Routenführung ist insbesondere in großen, unübersichtlichen und stark frequentierten Parkeinrichtungen, beispielsweise mehrstöckigen Parkhäusern, von Vorteil.

Wird nun das Fahrzeug 11 im Parkhaus auf der ausgewählten Abstellfläche 23 abgestellt, speichert die Navigationsvorrichtung 15 des Fahrzeugs 11 seine Position. Diese Funktion kann z. B. durch das Abstellen des Motors an der Position der ausgewählten Abstellfläche 23 getriggert werden. Die gemerkte Position der nun belegten Abstellfläche 23 überträgt die Navigationsvorrichtung 15 an den Speicher 90, bzw. über die Kommunikationseinrichtung 300 an das System 40 und den Schlüssel des Fahrzeugs, an ein Mobiltelefon des Fahrers oder an ein anderes Gerät (z. B. Chipkarte) mit einer vorzugsweise drahtlosen Kommunikationsmöglichkeit des Fahrers 80. Die Position der Abstellfläche 23 kann auf Wunsch auf dem Speichermedium im Kommunikationsendgerät 80 des Fahrers angezeigt werden. Hierdurch kann der Fahrer sein Fahrzeug 11 bei der Rückkehr zu diesem schneller wiederfinden.

Nun verlässt der Fahrer das Parkhaus 20. Am Ausgang erfasst das System 26 z. B. durch Abfrage des Speichermediums, auf welcher Abstellfläche das Fahrzeug 11 steht. Da das Speichermedium die Position des Fahrzeugs 11 bzw. der ausgewählten Abstellfläche 23 gespeichert hat, übergibt es diese an das Parkplatz-Management-System 26 des Parkhauses 20. Nun ist dem Parkplatz-Management-System 26 bekannt, dass die von dem Fahrer ausgewählte Abstellfläche 23, deren Position an das Parkplatz-Management-System 26 übermittelt wurde, belegt ist. Das Parkplatz-Management-System 26 überträgt auch diese Position zur Verifikation an das System 40, da hierdurch noch mal geprüft wird, ob das Fahrzeug sich auch dort befindet, wo es der Fahrer bei der Bestätigung als Lieferort abgestellt hat.

Nach einiger Zeit kommt der Fahrer zurück zum Parkhaus 20, um mit seinem Fahrzeug 11 weiterzufahren. Alternativ kann der Fahrer die am Parkplatz angegeben alphanumerische Parkmarkierung, welche der Fahrer beim Abstellen des Fahrzeuges erkannt hat, auch direkt in den Speicher seines Kommunikationsendgerätes 80 eintippen/ einstellen.

In einem bevorzugten Ausführungsbeispiel existiert in dem Parkhaus 20 eine Vielzahl von Auslesestellen, an welche die Position des Fahrzeugs 11 aus dem Speichermedium übertragen werden kann. Eine solche Auslesestelle befindet sich beispielsweise an der Schranke 25 und/oder an den Türen und/oder Kassenautomaten des Parkhauses. An einer solchen Auslesestelle wird auf Anforderung durch den Fahrer die Position des Fahrzeugs 11 und gegebenenfalls der Weg dorthin angezeigt, so dass der Fahrer sein Fahrzeug 11 dem Lieferdienst die Position des abgestellten Fahrzeuges übermittel kann und der Fahrer sein Fahrzeug schnell wiederfinden kann. Die in der Navigationsvorrichtung 15 gespeicherte Position des Fahrzeugs 11 auf der Abstellfläche 23 wird bevorzugt auch als Startposition für die nächste Route verwendet, welche durch die Navigationsvorrichtung 15 berechnet wird. Die Position der frei gewordenen Abstellfläche 23 wird durch das Speichermedium oder die Navigationsvorrichtung 15 dem Parkhaus-Management-System 26 beim Ausfahren des Fahrzeugs 11 per Kurzstreckenfunk übertragen. Dem Parkplatz-Management-System 26 ist nun bekannt, dass die entsprechende Abstellfläche 23, auf der das Fahrzeug 11 vorher geparkt hatte, nun wieder frei ist.

Anstelle der Kurzstreckenkommunikation mit dem Parkhaus-Management-System 26 kann auch eine Kommunikation zu einem entsprechenden Parkplatz-Management-Server über GPS, UMTS, LTE, WiMax, W-LAN usw. erfolgen.

Das vorgeschlagene Verfahren lässt sich mit vergleichsweise geringem technischem Aufwand und ohne zusätzliche Hardware im Fahrzeug realisieren.

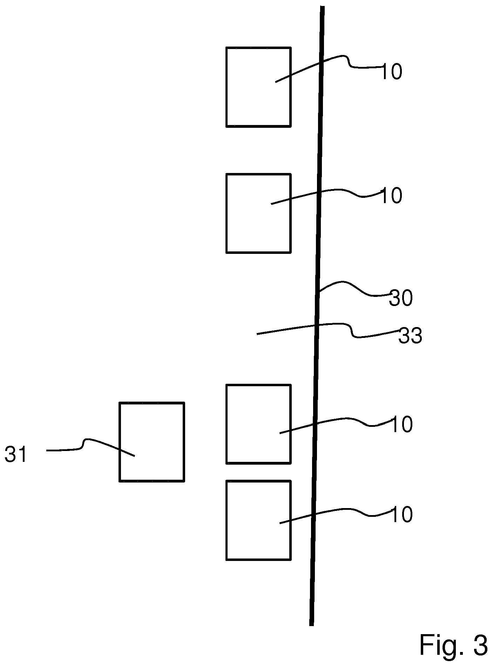

In einem weiteren, anhand von Figur 3 dargestellten Ausführungsbeispiel wird erläutert, wie die Positionsbestimmung zur Angabe als Lieferort im Innenstadtbereich von Großstädten erfolgen kann.

Das mittels Figur 3 dargestellte Verfahren dient zum Auffinden von Parklücken beispielsweise am Rand 30 einer Straße und somit der Bestimmung eines Lieferortes. Hier parken viele Fahrzeuge 10, welche dem in Figur 1 dargestellten Fahrzeug 10 entsprechen. Einen gleichen Aufbau besitzt auch das eine Abstellfläche suchende Fahrzeug 31.

Zur Realisierung des erfindungsgemäßen Verfahrens ist es von Vorteil, wenn die Fahrzeuge 10, 31 Abstandssensoren aufweisen, welche vorn, hinten oder seitlich an den beteiligten Fahrzeugen 10, 31 montiert sind, wie beispielsweise Ultraschall-, Infrarot-, Radar-Sensoren, Kamera, etc. Mittels der Recheneinheit 14 können die Fahrzeuge 10, 31 ferner eine Fahrzeug-zu-Fahrzeug-Kommunikation und/oder Fahrzeug-zu-Infrastruktur-Kommunikation über die Kommunikationseinrichtungen 300/310 durchführen. Ferner ist eine Navigationsvorrichtung 15 vorhanden.

Während der Suche nach einem Parkplatz nimmt der Fahrer des suchenden Fahrzeugs 31 zunächst über eine Taste oder ein Kommando eine Verbindung mit Fahrzeugen 10 in einem Umkreis mit einem vorab definierten Radius um das Fahrzeug 31 auf. Hierdurch werden die bereits parkenden Fahrzeuge 10 in dem Umkreis aus einem sogenannten Sleep-Modus (inaktiver Zustand) "geweckt" und in den aktiven Zustand versetzt. Die sich nun im aktiven Zustand befindenden Fahrzeuge 10 vermessen dann ihre Abstände zum jeweils nächsten Fahrzeug 10 oder zur nächsten (nicht dargestellten) Infrastruktureinrichtung, beispielsweise einer Ampel oder einem Verkehrsschild, nach vorn, hinten und/oder zu den Seiten.

Mittels Fahrzeug-zu-Fahrzeug-Kommunikation werden die ermittelten Abstandsdaten von den Fahrzeugen 10 des Umkreises an die Rechenvorrichtung 14 des eine Abstellfläche suchenden Fahrzeugs 31 übermittelt. Ferner werden die Positionen der jeweiligen Fahrzeuge 10 an die Rechenvorrichtung 14 dieses Fahrzeugs 31 übertragen. Die Rechenvorrichtung 14 des GPS-Systems 12 kann nun aus den über C2C-Kommunikation übertragenen Informationen die jeweils zur Verfügung stehende Fläche zum Parken feststellen. Ist diese ausreichend groß, so wird der entsprechende freie Raum als Abstellfläche ausgewiesen und dem Fahrer als zum Parken zur Verfügung stehende Abstellfläche angezeigt. Bei der in Figur 3 dargestellten Situation stellt die Parklücke 33 eine derartige Abstellfläche dar. Nachdem das Fahrzeug 10 den Parkplatz eingenommen hat wird über die Kommunikationseinrichtung 300 diese Position aus dem GPS-Systems 12 an das System 40 übermittelt. Die Navigationsvorrichtung 15 kann aus den von der Rechenvorrichtung 14 ermittelten Daten die Route von der aktuellen Position des eine Abstellfläche suchenden Fahrzeugs 31 zur freien Abstellfläche 33 berechnen und dem Fahrer zum schnellen Auffinden der Parklücke zur Verfügung stellen. Existieren mehrere freie Abstellflächen im Umkreis des Fahrzeugs 31, können diese auf einer Anzeige der Rechenvorrichtung 14 dargestellt werden, so dass sich der Fahrer eine für ihn passende Abstellfläche auswählen kann.

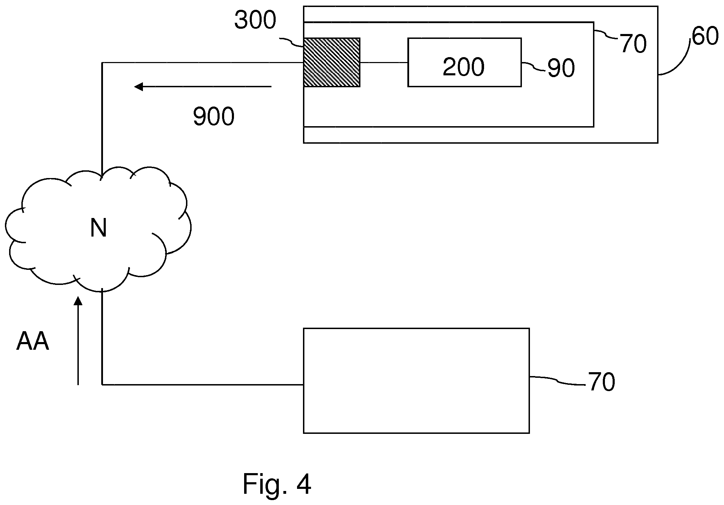

Die Figur 4 zeigt eine schematische Darstellung einer Zugangsanordnung 60 des erfindungsgemäßen Verfahrens, bei der die Aktualisierung der Berechtigungsdaten 200 über ein Mobilfunktelefon 70 des Lieferanten eingeleitet wird. Außerdem dargestellt sind ein Mobilfunkkommunikationsnetz KN, die Zugangsanordnung 60, das Steuergerät 60, der Speicher SP und die Kommunikationseinrichtung 300 des Steuergerätes 120.

Erfindungsgemäß ist es in diesem Ausführungsbeispiel möglich, dass der autorisierte Lieferant die Berechtigungsdaten 200 der Zugangsanordnung 60 auch ohne die Zuhilfenahme einer Servicezentrale aktualisieren kann. Hierzu wird zunächst vom Mobilfunkendgerät 70 des autorisierten Lieferanten eine Verbindung über das Mobilfunkkommunikationsnetz N zur Kommunikationseinrichtung 300/310 der Zugangsanordnung 60 aufgebaut. Es erfolgt dann eine eindeutige Identifikation des autorisierten Lieferanten. Dies kann auf verschiedene Weise erfolgen. Erfindungsgemäß kann das Steuergerät 100 einen Autorisierungscode 900 erzeugen und über die Kommunikationseinrichtung 300/310 beispielsweise als Kurznachricht - SMS - an das Mobilfunkendgerät 70 des autorisierten Lieferanten senden. Dieser Autorisierungscode 900 wird im Mobilfunkendgerät 70 in einem Speicher oder auf dessen SIM-Karte gespeichert (nicht dargestellt). Im Fall einer gewünschten Aktualisierung der Benutzerdaten 200, muss dieser Autorisierungscode 900 an die Kommunikationseinrichtung 300 zurückgesendet werden. Erfindungsgemäß kann dann eine zweiteilige Identifikation erfolgen. Dazu wird zunächst geprüft, ob der Autorisierungscode 900 von einem bekannten Mobilfunkendgerät 70 bzw. dessen SIM-Karte gesendet wurde. Ist dies der Fall, so wird in einem zweiten Schritt der vom Mobilfunkgerät 70 gesendete Autorisierungscode 900 dann vom Steuergerät 120 der Zugangsanordnung 60 überprüft. Verläuft diese Überprüfung positiv, so werden die Berechtigungsdaten 200 im Steuergerät 120 entsprechend der Anforderung 700 aktualisiert, z. B. gelöscht.

Dieses Verfahren zur Identifikation des Lieferanten kann auch noch weiter abgesichert werden, indem die Kommunikationseinrichtung des Steuergerätes 300/310 nach Erhalt des Autorisierungscodes eine Anfrage beispielsweise als Kurznachricht -SMS- an eine zuvor im Steuergerät 120 oder in der Kommunikationseinrichtung des Steuergerätes 310/300 abgespeicherte Adresse (Telefonnummer) eines Mobilfunkgeräts sendet, die dann innerhalb eines Zeitfensters bestätigt werden muss, z. B. wiederum durch eine Kurznachricht mit einem Autorisierungscode an die Kommunikationseinrichtung des Steuergerätes 310/300.

Ein weiteres mögliches Identifikationsverfahren ist die Verwendung eines oben im Detail beschriebenen Challenges/Response-Verfahrens, wobei zuvor ein gemeinsames Geheimnis zwischen dem Steuergerät 120 der Zugangsanordnung 60 und dem Mobilfunkendgerät 70 des Lieferanten bzw. dessen SIM-Karte ausgetauscht wird. Hierbei muss sich das Mobilfunkendgerät 70 des Lieferanten gegenüber der Zugangsanordnung 60 authentifizieren.

Vorteilhaft ist der Einsatz der oben beschriebenen Verfahren nicht nur zur Löschung von Benutzerdaten 200 im Speicher SP, sondern auch zur Reaktivierung von Benutzerdaten 200.

Erfindungsgemäß können die beschriebenen Verfahren auch auf RKE-Schlüssel -remote keyless entry- oder auch Wegfahrsperren angewendet werden.

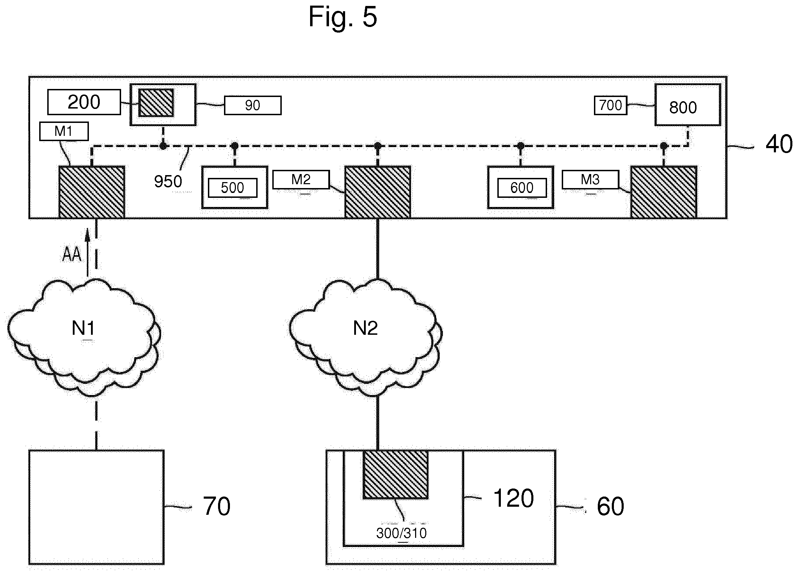

Die Figur 5 zeigt schematisch ein System zur Übermittlung von Sendungen. Das System weist einen Speicher 90 und darin gespeicherte Berechtigungsdaten 200 auf. Der Speicher 90 ist über einen Datenbus 950 mit einem ersten Identifikationsmodul verbunden, das eine erste Identifikationsroutine 500 ermöglicht. Außerdem sind an diesem Datenbus 950 ein zweites Identifikationsmodul und ein Aktualisierungsmodul 700 angeschlossen, die eine zweite Identifikationsroutine 600 und eine Aktualisierungsroutine 800 ermöglichen. Schließlich verfügt das System über mindestens drei Kommunikationsmodule M1, M2 und M3. Über das erste Kommunikationsmodul M1 kann über ein Mobilfunkkommunikationsnetz N1 eine Kommunikationsverbindung von dem Kommunikationsendgerät 70 eines Lieferanten aufgebaut werden. Das zweite Kommunikationsmodul M2 kann über ein zweites Kommunikationsnetz N2 eine Kommunikationsverbindung zum Steuergerät 120 der Zugangsanordnung 60 über dessen Kommunikationseinrichtung 300/310 aufbauen.

Wiederum ist es erfindungsgemäß möglich, dass der autorisierte Lieferant die Berechtigungsdaten 200 mit Hilfe seines Kommunikationsendgerätes 70 über das Kommunikationsnetz N1 eine Kommunikationsverbindung zu dem System 40 über deren Kommunikationseinrichtung 100 aufbaut. Dabei finden die Kommunikationsnetz-spezif ischen Protokolle des Kommunikationsnetzes N1 Verwendung. Mittels der ersten Identifikationsroutine 500 wird daraufhin der autorisierte Lieferant unter Verwendung eines der oben beschriebenen Identifikationsverfahren identifiziert. Daraufhin wird vom Lieferant über dessen Kommunikationsendgerät 70 eine Aktualisierungsanforderung 700 an das System übermittelt. Danach wird über das zweite Kommunikationsmodul M2 über das Mobilfunkkommunikationsnetz N2 eine Mobilfunkverbindung zum Steuergerät 120 der Zugangsanordnung 60 über dessen Kommunikationseinrichtung 300/310 aufgebaut.

Nun wird das System von dem Steuergerät 120 eindeutig identifiziert. Hierzu findet die zweite Identifikationsroutine 600 Verwendung. Es kann dabei eines der oben beschriebenen Verfahren zur Identifikation eingesetzt werden.

Ist die Identifikation erfolgt, findet eine Aktualisierung der Berechtigungsdaten 200 sowohl im Steuergerät 120 als auch im Speicher 90 des Systems statt. Hierzu findet die Aktualisierungsroutine 800 Anwendung. Die Aktualisierung erfolgt dabei entsprechend der Aktualisierungsanforderung 700 des berechtigten Lieferanten.

Weder das erfindungsgemäße Verfahren, noch die erfindungsgemäße Anordnung sind auf die Ausführungsbeispiele beschränkt, sondern können in allen Zugangsanordnungen z. B. für Gebäude oder elektrische Einrichtungen eingesetzt werden, die über Kommunikationseinrichtungen zur Kommunikation über Kommunikationsnetze verfügen. Hierbei sind die Kommunikationseinrichtungen auf die verwendeten Kommunikationsnetze und Identifikationsverfahren abzustimmen.

## Patentansprüche

1. Verfahren zur Übermittlung von Sendungen in Fahrzeugen, das die folgende Schritte umfasst:
- Registrierung von mindestens eines Fahrzeuges,
- Ermittlung der Position des Fahrzeuges,
- Freigabe einer Position des geparkten Fahrzeuges als Lieferanschrift an ein System (40) über eine Kommunikationseinrichtung (300) / Kommunikationseinheit (300) über ein Kommunikationsnetz (N2),
- Übermittlung der Position des geparkten Fahrzeuges über eine Kommunikationseinheit (300) / Kommunikationseinrichtung (300) über ein Kommunikationsnetz (N2),
- Übermittlung einer Berechtigungsfreigabe zum Öffnen mindestens einer Tür und/oder eines Kofferraums des Fahrzeuges durch einen Lieferanten über eine Kommunikationseinrichtung des Systems (40) an ein Kommunikationsendgerät (70) des Lieferanten, wobei das Öffnen innerhalb eines bestimmten Zeitfensters gültig ist,
- Übermittlung eines Funksignals (140), das die Berechtigungsfreigabe enthält, wobei bei vorliegender Berechtigung die Zugangsanordnung einen Öffnen mindestens einer Tür und/oder eines Kofferraumes des Fahrzeuges (10) aktiviert,
- nach erfolgtem Öffnen und Übermitteln der Sendung und durch das manuelle Schließen der Tür und/oder des Kofferraums des Fahrzeuges (10) durch den Lieferanten, eine Bestätigung der Übermittlung der Sendung durch den Lieferanten über die Kommunikationseinrichtung (300) über das Kommunikationsnetz (N2) an das Kommunikationsendgerät (80) des Fahrers über das System (40) erfolgt und
- nach einer Übertragung einer Aktualisierungsanforderung (AA) durch das Kommunikationsgerät (80) des Fahrers eine Aktualisierung von Berechtigungsdaten (200) im Steuergerät (120) der Zugangsanordnung (60) vorgenommen wird, **dadurch gekennzeichnet ist, dass** die Ermittlung der Position des Fahrzeuges die folgenden Schritte umfasst:
- Berechnen der Position mindestens einer freien Abstellfläche (22,33) basierend auf einer Fahrzeug-zu-Fahrzeug- und/oder einer Fahrzeug-zu-Infrastruktur-Kommunikation ausgehend von der aktuellen Position des Fahrzeugs und übermitteln dieser Position einer Navigationsvorrichtung (15) des Fahrzeugs (11, 31),
o wobei die Position der mindestens einen freien Abstellfläche (33) aus einer Abstandsmessung von mindestens einem Fahrzeug (10) oder mindestens einem Infrastrukturelement zu anderen Fahrzeugen (10) oder zu anderen Infrastrukturelementen berechnet wird, welche innerhalb eines Umkreises mit einem vorab festgelegten Radius um das nach einer freien Abstellfläche suchenden Fahrzeuges (31) angeordnet sind
- Einnehmen der freien Abstellfläche (22,33) durch das Fahrzeug (31).

2. Verfahren nach Anspruch 1, **dadurch gekennzeichnet, dass** die Position der freien Abstellfläche (22, 33) der Navigationsvorrichtung (15) dann übermittelt wird, wenn sich das Fahrzeug (11, 31) in einem vorab definierten Bereich in Bezug auf die freie Abstellfläche (22, 33), vorzugsweise in der Nähe einer Schranke (25) einer Parkeinrichtung (20), befindet.

3. Verfahren nach einem der vorhergehenden Ansprüche, **dadurchgekennzeichnet**, dass nach dem Abstellen des Fahrzeugs (11) auf einer ausgewählten freien Abstellfläche (23) die Position der ausgewählten Abstellfläche (23) einem vorzugsweise durch den Fahrer transportierbaren Speichermedium, vorzugsweise einem Schlüssel des Fahrzeugs (11) und/oder einem Mobiltelefon des Fahrers und/oder einer Chipkarte, übermittelt, danach auf dem Speichermedium gespeichert und vorzugsweise zusätzlich angezeigt wird.

4. Verfahren nach Anspruch 3, **dadurch gekennzeichnet, dass** die Navigationsvorrichtung (15) oder das Speichermedium die Position der ausgewählten Abstellfläche (23) einem Parkplatz-Management-System (26) der Parkeinrichtung (20) überträgt.

5. Verfahren nach Anspruch 4, **dadurch gekennzeichnet, dass** dem System (40) über das Parkplatz-Management-System (26) der Parkeinrichtung (20) beim Verlassen der ausgewählten Abstellfläche (23) die Position der nun wieder freien Abstellfläche (23) übertragen wird.

6. Verfahren nach einem der vorhergehenden Ansprüche, **dadurch gekennzeichnet, dass** von dem mindestens einen Infrastrukturelement weitere Informationen zur Abstellflächensituation, vorzugsweise über Anwohnerparkzonen oder Halteverbote, übermittelt und/oder aus einer digitalen Karte der Navigationsvorrichtung (15) bereitgestellt sowie zur Berechnung der Position der mindestens einen freien Abstellfläche (33) herangezogen werden.

7. Verfahren nach Anspruch 1, **dadurch gekennzeichnet, dass** der Lieferant durch Stimmerkennung, durch Übertragung einer Identifikationsinformation -PIN/TAN-, oder durch ein Challenge-Response-Verfahren identifiziert wird.

8. Verfahren nach Anspruch 1 7, **dadurch gekennzeichnet, dass** das System (40) durch die Verwendung einer eindeutigen kryptographischen Information identifiziert wird.

9. Verfahren nach einem der Ansprüche 7 bis 8, **dadurch gekennzeichnet, dass** das drahtlose Kommunikationsnetz (N2) über ein Mobilfunkkommunikationsnetz und/oder WLAN-Netz aufgebaut wird.

10. Verfahren nach einem der Ansprüche 7 bis 9, **dadurch gekennzeichnet, dass** die Kommunikation zwischen der Kommunikationseinrichtung (100) des Systems (40) und Kommunikationseinrichtung (300) der Zugangsanordnung (60) und der Kommunikationseinrichtung (71) des Lieferanten durch Benutzung eines gemeinsamen Geheimnisses verschlüsselt wird.

## Claims

1. Method for delivering consignments in vehicles, comprising the following steps:
- registering at least one vehicle,
- determining the position of the vehicle,
- releasing a position of the parked vehicle as a delivery address to a system (40) via a communication device (300) / communication unit (300) over a communication network (N2),
- sending the position of the parked vehicle via a communication unit (300) / communication device (300) over a communication network (N2),
- sending an authorization release for opening at least one door and/or a stowage compartment of the vehicle by a deliverer via a communication device of the system (40) to a communication end device (70) of the deliverer, the opening operation being valid within a specific time window,
- sending a radio signal (140), which contains the authorization release, the access arrangement activating opening of at least one door and/or a stowage compartment of the vehicle (10) when the authorization is present,
- after an opening operation has been carried out and the consignment has been delivered, and by the deliverer manually closing the door and/or the stowage compartment of the vehicle (10), providing a confirmation of the delivery of the consignment by the deliverer via the communication device (300) over the communication network (N2) to the communication end device (80) belonging to the driver of the vehicle via the system (40) and
- after an update request (AA) has been sent by the communication device (80) belonging to the driver, performing an updating of authorization data (200) in the controller (120) of the access arrangement (60), **characterized in that** the determination of the position of the vehicle comprises the following steps:
- starting from the current position of the vehicle, calculating the position of at least one free parking space (22, 33) on the basis of a vehicle-to-vehicle and/or vehicle-to-infrastructure communication and sending this position to a navigation apparatus (15) of the vehicle (11, 31),
o the position of the at least one free parking space (33) being calculated by measuring the distance of at least one vehicle (10) or at least one infrastructure element from other vehicles (10) or from other infrastructure elements that are arranged within a perimeter of a predetermined radius around the vehicle (31) searching for a free parking space,
- parking the vehicle (31) in the free parking space (22, 33).

2. Method according to Claim 1, **characterized in that** the position of the free parking space (22, 33) is sent to the navigation apparatus (15) when the vehicle (11, 31) is in a predefined area with respect to the free parking space (22, 23), preferably in the vicinity of a barrier (25) of a parking facility (20).

3. Method according to one of the preceding claims, **characterized in that**, after the parking of the vehicle (11) in a selected free parking space (23), the position of the selected parking space (23) is sent to a storage medium, preferably a storage medium that can be carried by the driver, preferably a key of the vehicle (11) and/or a mobile phone belonging to the driver and/or a chip card, then stored on the storage medium and preferably additionally displayed.

4. Method according to Claim 3, **characterized in that** the navigation apparatus (15) or the storage medium sends the position of the selected parking space (23) to a parking space management system (26) of the parking facility (20).

5. Method according to Claim 4, **characterized in that**, when the selected parking space (23) is vacated, the position of the parking space (23) that is then free again is sent to the system (40) via the parking space management system (26) of the parking facility (20).

6. Method according to one of the preceding claims, **characterized in that** further information about the parking space situation, preferably concerning residential parking zones or stopping restrictions, is sent by the at least one infrastructure element and/or is provided by a digital map of the navigation apparatus (15) and is also used for calculating the position of the at least one free parking space (33).

7. Method according to Claim 1, **characterized in that** the deliverer is identified by voice recognition, by sending an item of identification information -PIN/TAN-, or by a challenge-response method.

8. Method according to Claims 1-7, **characterized in that** the system (40) is identified by the use of a unique item of cryptographic information.

9. Method according to either of Claims 7 and 8, **characterized in that** the wireless communication network (N2) is set up via a mobile radio communication network and/or a WLAN network.

10. Method according to one of Claims 7 to 9, **characterized in that** the communication between the communication device (100) of the system (40) and the communication device (300) of the access arrangement (60) and the communication device (71) belonging to the deliverer is encrypted by using a shared secret.

## Revendications

1. Procédé pour transmettre des envois dans des véhicules, comprenant les étapes suivantes :
- l'enregistrement d'au moins un véhicule,
- la détermination de la position du véhicule,
- la libération d'une position du véhicule stationné en tant qu'adresse de livraison à un système (40) par l'intermédiaire d'un dispositif de communication (300) / d'une unité de communication (300) sur un réseau de communication (N2),
- la transmission de la position de l'unité de communication (300) / du dispositif de communication (300) du véhicule stationné sur un réseau de communication (N2),
- la transmission d'une autorisation de libération pour l'ouverture d'au moins une porte et/ou d'un coffre du véhicule par un fournisseur du système (40) par l'intermédiaire d'un dispositif de communication à un terminal de communication (70) du fournisseur, dans lequel l'ouverture est valable à l'intérieur d'une fenêtre de temps déterminée,
- la transmission d'un signal radio (140) qui contient la libération d'autorisation, dans lequel le moyen d'accès active une ouverture d'au moins une porte et/ou un coffre du véhicule (10) en présence d'une autorisation,
- après que l'ouverture a réussi et que l'envoi a été transmis, et par fermeture manuelle de la porte et/ou du coffre du véhicule (10) par le fournisseur, une confirmation de la transmission de l'envoi par le fournisseur est effectuée par l'intermédiaire du dispositif de communication (300) sur le réseau de communication (N2) au terminal de communication (80) du conducteur par l'intermédiaire du système (40) et
- après une transmission d'une demande d'actualisation (AA) par le dispositif de communication (80) du conducteur, une actualisation de données d'autorisation (200) est effectuée dans le dispositif de commande (120) du moyen d'accès (60), **caractérisé en ce que** la détermination de la position du véhicule comprend les étapes suivantes :
- le calcul de la position d'au moins une aire de stationnement libre (22, 33) sur la base d'une communication de véhicule à véhicule et/ou de véhicule à infrastructure à partir de la position actuelle du véhicule et la transmission de ladite position à un dispositif de navigation (15) du véhicule (11, 31),
o dans lequel la position de ladite au moins une aire de stationnement libre (33) est calculée à partir d'une mesure de distance d'au moins un véhicule (10) ou d'au moins un élément d'infrastructure par rapport à d'autres véhicules (10) ou à d'autres éléments d'infrastructure qui sont disposés à l'intérieur d'une circonférence ayant un rayon prédéterminé autour du véhicule (31) recherchant une aire de stationnement libre
- l'occupation de l'aire de stationnement libre (22, 33) par le véhicule (31).

2. Procédé selon la revendication 1, **caractérisé en ce que** la position de l'aire de stationnement libre (22, 33) est transmise au dispositif de navigation (15) lorsque le véhicule (11, 31) se trouve dans une zone prédéfinie par rapport à l'aire de stationnement libre (22, 33), de préférence à proximité d'une barrière (25) d'un dispositif de stationnement (20).

3. Procédé selon l'une des revendications précédentes, **caractérisé en ce qu'**après que le véhicule (11) a été stationné sur une aire de stationnement libre (23) sélectionnée, la position de l'aire de stationnement (23) sélectionnée est transférée sur un support de stockage qui peut de préférence être transporté par le conducteur, de préférence une clé du véhicule (11) et/ou un téléphone mobile du conducteur et/ou une carte à puce, puis est stockée sur le support de stockage et de préférence en outre affichée.

4. Procédé selon la revendication 3, **caractérisé en ce que** le dispositif de navigation (15) ou le support de stockage transmet la position de l'aire de stationnement (23) sélectionnée à un système de gestion de place de stationnement (26) du dispositif de stationnement (20).

5. Procédé selon la revendication 4, **caractérisé en ce que** la position de l'aire de stationnement (23) désormais de nouveau libre est transmise au système (40) par l'intermédiaire du système de gestion de place de stationnement (26) du dispositif de stationnement (20) lorsque l'aire de stationnement (23) sélectionnée est quittée.

6. Procédé selon l'une des revendications précédentes, **caractérisé en ce que** d'autres informations concernant l'état de l'aire de stationnement, de préférence relatives à des zones de stationnement résidentielles ou à des interdictions d'arrêt, sont transmises et/ou fournies par ledit au moins un élément d'infrastructure à partir d'une carte numérique du dispositif de navigation (15) et sont prises en comptes pour calculer la position de ladite au moins une aire de stationnement libre (33).

7. Procédé selon la revendication 1, **caractérisé en ce que** le fournisseur est identifié par reconnaissance vocale, par transmission d'une information d'identification -PIN/TAN-, ou par un procédé de défi-réponse.

8. Procédé selon la revendication 7, **caractérisé en ce que** le système (40) est identifié par utilisation d'une information cryptographique unique.

9. Procédé selon l'une quelconque des revendications 7 à 8, **caractérisé en ce que** le réseau de communication sans fil (N2) est établi par l'intermédiaire d'un réseau de communication radio mobile et/ou d'un réseau WLAN.

10. Procédé selon l'une quelconque des revendications 7 à 9, **caractérisé en ce que** la communication entre le dispositif de communication (100) du système (40) et le dispositif de communication (300) du moyen d'accès (60) et le dispositif de communication (71) du fournisseur est cryptée par utilisation d'un secret commun.
